(19) Europäisches Patentamt

European Patent Office

Office européen des brevets

(11) **EP 0 639 931 B1**

(12) **EUROPÄISCHE PATENTSCHRIFT**

(45) Veröffentlichungstag und Bekanntmachung des Hinweises auf die Patenterteilung:
**16.01.2002 Patentblatt 2002/03**

(51) Int Cl.⁷: **H04Q 11/04**

(21) Anmeldenummer: **94111974.5**

(22) Anmeldetag: **01.08.1994**

(54) **Verfahren zum Austausch von Informationen zwischen ISDN-Endeinrichtungen**

Method for information transfer between ISDN terminals

Méthode de transfert d'informations entre terminaux RNIS

(84) Benannte Vertragsstaaten:
**AT BE CH DE DK ES FR GB GR IT LI NL SE**

(30) Priorität: **16.08.1993 DE 4327538**

(43) Veröffentlichungstag der Anmeldung:
**22.02.1995 Patentblatt 1995/08**

(73) Patentinhaber: **SIEMENS AKTIENGESELLSCHAFT**
**80333 München (DE)**

(72) Erfinder: **Flake, Horst, Dipl.-Ing.**
**D-82041 Oberhaching (DE)**

(56) Entgegenhaltungen:
**EP-A- 0 493 913        DE-A- 4 205 554**

**Beschreibung**

Die Erfindung bezieht sich auf ein Verfahren gemäß dem Oberbegriff des Patentanspruchs.

Sollen zwischen ISDN-Endeinrichtungen (ISDN = Integrated Services Digital Network = diensteintegrierendes digitales Nachrichtennetz), d.h. zwischen Endgeräten, Terminals oder auch Telekommunikations-Anlagen mit ISDN-Standardschnittstellen ohne Sonderfunktionen, wahlweise (per call Basis) in verschlüsselter oder unverschlüsselter Form ausgetauscht werden, so stehen zu diesem Zweck an den Schnittstellen nur die ISDN-Basisrufprozeduren und/oder Zusatzdienste (supplementary services) zur Verfügung. Letzere werden jedoch zumindest in der ISDN-Einführungsphase unter Umständen noch nicht von allen Netzbetreibern angeboten.

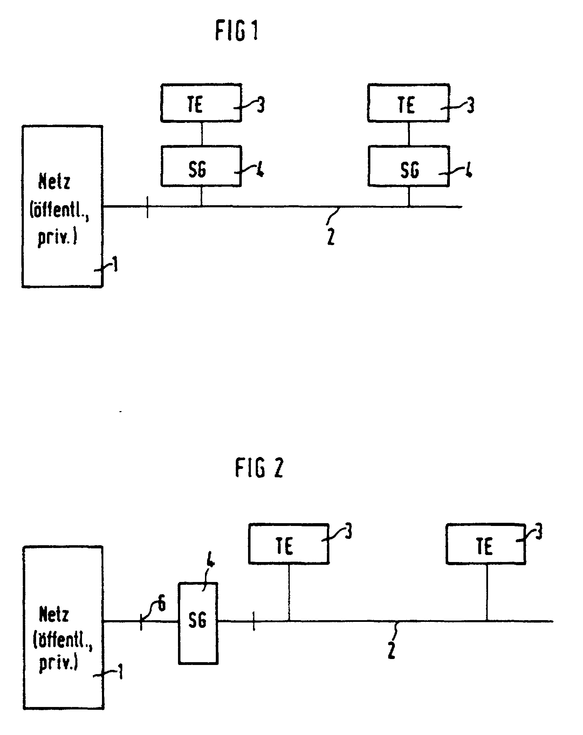

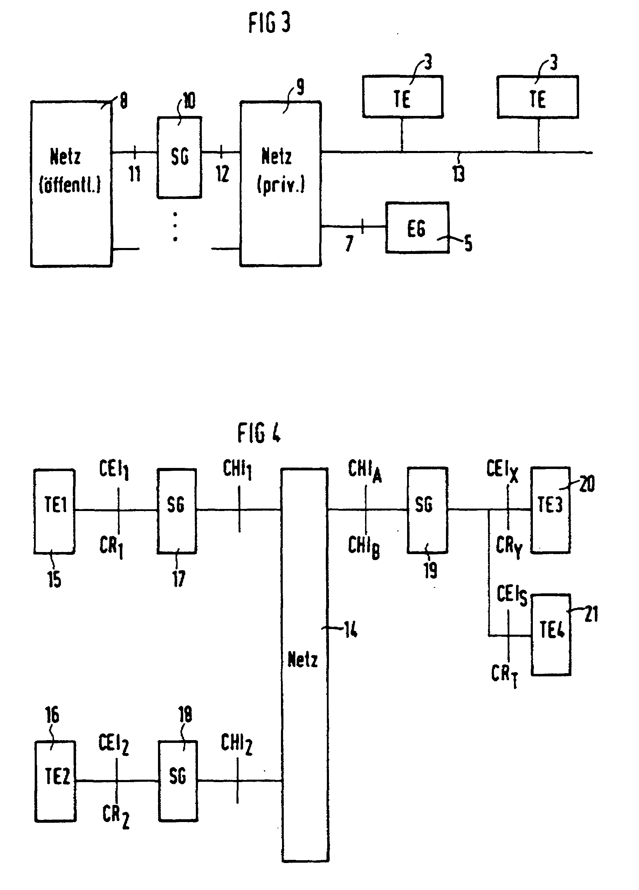

Verschiedene Konfigurationsmöglichkeiten einer Anordnung von Schlüsselgeräten für ISDN-Telekommunikations-Endgeräte sind in den Figuren 1 bis 3 dargestellt. Im Beispiel nach Fig. 1 sind an ein öffentliches oder privates Netz 1 über einen $S_O$-Bus 2 mehrere Telekommunikations-Endgeräte 3 jeweils über je ein Schlüsselgerät 4 angeschlossen. Die Schlüsselgeräte 4 liegen somit in diesem Beispiel jeweils bei einer ISDN-Endeinrichtung, das jeweils durch ein Telekommunikations-Endgerät 3 gebildet wird. Im Beispiel nach Fig. 2 ist an das öffentliche oder private Netz 1 im $S_O$-Bus 2 ein einziges Schlüsselgerät 4 über eine Netzschnittstelle 6 angeschlossen. Dieses Schlüsselgerät 4 liegt im $S_O$-Bus 2 vor mehreren verschiedenen ISDN-Endeinrichtungen, die durch Telekommunikations-Endgeräte 3 gebildet werden. Im Beispiel nach Fig. 3 liegen zwischen einem öffentlichen Netz 8 und einem privaten Netz 9, das eine Telekommunikations-Anlage ist, an mehreren parallelen Schnittstellen mehrere Schlüsselgeräte 10. Die Schnittstellen zwischen den Schlüsselgeräten 10 und dem öffentlichen Netz 8 bzw. dem privaten Netz 9 sind mit 11 bzw. 12 bezeichnet. Zum privaten Netz 9 gehören mehrere busgesteuerte ISDN-Endeinrichtungen in Form von Telekommunikations-Endgeräten 3. Die Busschnittstelle, die vom privaten Netz 9 zu den einzelnen ISDN-Endeinrichtungen 3 führt, ist mit 13 bezeichnet.An die Telekommunikationsanlage, d.h. an das private Netz 9, können auch Endgeräte 5 mit Schnittstellen 7 angeschlossen sein, die sich technisch von der Busschnittstelle 13 unterscheiden, wobei diesen Endgeräten 5 die Verschlüsselungsfunktion in den Schlüsselgeräten 10 ebenfalls zugänglich ist.

Für die Übermittlung der verschiedensten Informationsarten, z.B. Sprache, Daten, Audio, Video, bietet das Netz den Anwendern in sogenannten Übermittlungsdiensten (bearer services) bestimmte Grundfunktionen. Rufende ISDN-Endeinrichtungen müssen deshalb bei einem Verbindungsaufbau den gewünschten Übermittlungsdienst signalisieren. Gerufene ISDN-Endeinrichtungen prüfen bei kommenden Rufen ihre Kompatibilität dazu. Außerdem können ISDN-Endeinrichtungen anwendungsabhängig zusätzliche Kompatibilitätsinformationen end-to-end senden und in die Entscheidung zur Rufannahme einbeziehen.

Werden die vorher erwähnten Informationsarten verschlüsselt übermittelt, so muß zur Wahrung der Bitintegrität wie bei einer Datenübertragung der Übermittlungsdienst "unrestricted digital information" verwendet werden. Für die Übermittlung bestehen daher in den in den Figuren 1 bis 3 beispielhaft dargestellten Konfigurationen folgende Probleme:

    a. Pro Verbindung muß das rufende Schlüsselgerät dem gerufenen Schlüsselgerät eindeutig signalisieren, ob verschlüsselte oder unverschlüsselte Übermittlung gewünscht wird. Die ISDN-Basisrufprozeduren bieten dazu bisher keine allgemeine Lösng, da beispielsweise bei Verwendung des Attributes "unrestricted digital information" ohne Zusatzinformtion Mehrdeutigkeit besteht (verschlüsselte Information oder unverschlüsselte Daten).

    b. Das gerufene Schlüsselgerät muß bei verschlüsselter Übermittlung die Kompatibilitätselemente für die ursprüngliche Informationsart zur Rufzustellung an die angeschlossenen ISDN-Endeinrichtungen rekonstruieren, damit diese die Rufannahme standardmäßig behandeln können.

Beide Probleme erscheinen auf der Grundlage der Basis-Rufprozeduren in Verbindung mit einigen Zusatzdiensten wie z.B. vorzugsweise dem Service UUS1 (oder auch Subadressing) lösbar. Dabei würde die nach den Regeln der Basis-rufprozeduren nicht übermittelbare Information rufbegleitend mit Hilfe der Zusatzdienste transportiert werden. Dieses Verfahren würde den Vorteil bieten, daß nur die ISDN-Endeinrichtungen sowie das Netz aktiv den Verbindungsaufbau steuern und die Schlüsselgeräte im Prinzip nur modifizierend in die Prozeduren eingreifen müßten.

Da die genannten Zusatzdienste unter Umständen aber nicht von allen Netzbetreibern netzübergreifend angeboten werden, muß zumindest als Ersatz eine zusätzliche Inbandsignalisierung verwendet werden. Dabei müßte in folgender Weise vorgegangen werden:

-     Die rufende ISDN-Endeinrichtung erreicht bei Verbindungssaufbau einen bestimmten Verbindungs-Zwischenzustand.

-     Das rufende Schlüsselgerät stellt in diesem Zustand über das Netz hinweg die Verbindung zum gerufenen Schlüsselgerät her und übermittelt inband die erforderliche Zusatzinformation.

-     Danach startet das gerufene Schlüsselgerät den Verbindungsaufbau zur gerufenenen ISDN-Endeinrichtung und verwendet dabei auch die inband übermittelte Zusatzinformation.

Wie ersichtlich ist, sind aber in dieser Phase die rufende ISDN-Endeinrichtung, die gerufene ISDN-Endeinrichtung und das Netz nicht synchron bezüglich ihrer Verbindungszustände. Die ISDN-Endeinrichtungen befinden sich in verschiedenen Phasen des Verbindungsaufbaus, während das Netz die Verbindung bereits zwischen den Schlüsselgeräten hergestellt hat. Zur Herstellung der kompletten Verbindung können die Basis-Rufprozeduren an der Netzschnittstelle also nicht mehr herangezogen werden.

Aus der DE 42 05 554 ist ein Verfahren zum Transport von D-Kanal-Paketdaten in ISDN-Nebenstellen anlagen bekannt, bei dem die D-Kanal-Paketdaten über einen Kanal eines B-Kanal-Koppelfeldes übertragen werden können.

Aufgabe der Erfindung ist es, eine vorteilhafte und einfache Möglichkeit anzugeben, um den weiteren inbandsignalisierten Verbindungsaufbau bis zur vollständigen Synchronisierung der gesamten Verbindung durchzuführen.

Diese Aufgabe wird bei einem Verfahren gemäß dem Oberbegriff des Patentanspruchs durch die im kennzeichnenden Teil des Patentanspruchs angegebenen Merkmale gelöst.

- Einerseits können auf einer ISDN-Schnittstelle je nach Typ zeitparallel bis zu 2 oder bis zu 30 B-Kanal-Verbindungen bestehen, wobei der Parameter CHI (Channel Identifier) den Kanal kennzeichnet. Die entsprechenden Signalisierungsprozesse sind logisch durch die Parameter CEI (Connection endpoint identifier = Verbindungsendstellen-Identifizierer) und CR (Call reference = Rufreferenz) unterschieden.

- Andererseits haben die Parameter CHI, CEI und CR nur lokale Relevanz an der jeweiligen Schnittstelle, können also zur Koordinierung in den B-Kanalprozeduren nicht direkt verwendet werden.

Die im Patentanspruch angegebenen Maßnahmen ermöglichen eine vorteilhafte Inband-Koordinierung zwischen den Signalisierungsprozessen in den Schlüsselgeräten.

Ausführungsformen der Erfindung beinhalten noch weitere Aspekte:

- Die Inband-Emulation ist mit Erreichen des Zustandes "Verbindung zwischen den ISDN-Endeinrichtungen end-to-end durchgeschaltet" beendet.

- "Premature clearing" (Verbindungsabbau vor Erreichen dieses Zustandes) wird im B-Kanal signalisiert und danach von beiden Seiten im D-Kanal vollzogen.

Welche Signalisierungsprozeduren im einzelnen im B-Kanal emuliert werden, ist nicht Gegenstand der vorliegenden Erfindung.

In der Zeichnung zeigen

Fig. 1 bis 3 verschiedene Konfigurationsmöglichkeiten einer Anordnung von Schlüsselgeräten für ISDN-Telekommunikations - Endgeräte, und

Fig. 4 ein Blockschaltbild eines Ausführungsbeispiels der Erfindung.

Fig. 4 zeigt in einem Blockschaltbild in einem Ausführungsbeispiel die Zuordnung Transportmedium-Signalisierungsprozeß gemäß dem Verfahren nach der Erfindung. Auf der einen Seite eines öffentlichen oder privaten Netzes 14 sind zwei ISDN-Endeinrichtungen 15 und 16 mit jeweils einem Schlüsselgerät 17 bzw. 18 vorhanden, und auf der anderen Seite des Netzes 14 liegt ein Schlüsselgerät 19 im Zuführungsweg zu zwei ISDN-Endeinrichtungen 20 und 21. Die Kanalidentifizierungsparameter auf der linken Seite des Netzes sind mit $CHI_1$ bzw. $CHI_2$ bezeichnet. Auf der rechten Seite des Netzes 14 lauten die Kanalidentifizierungsparameter im einzigen Bus $CHI_A$ und $CHI_B$. Die Signalisierungsprozesse auf der linken Seite des Netzes 14 sind mit $CEI_1$ und $CR_1$ zur ISDN-Endeinrichtung 15 bzw. $CEI_2$ und $CR_2$ zur ISDN-Endeinrichtung 16 bezeichnet. Auf der rechten Seite des Netzes werden die Signalisierungsprozesse durch die Parameter $CEI_X$ und $CR_Y$ zur ISDN-Endeinrichtung 20 bzw. durch die Parameter $CEI_S$ und $CR_T$ zur ISDN-Endeinrichtung 21 unterschieden.

Sollen z.B. zum einen zwischen den ISDN-Endeinrichtungen 15 und 21 und zum anderen zwischen den ISDN-Endeinrichtungen 16 und 20 Verbindungen erstellt werden, so lauten die entsprechenden Parameter:

$$CEI_1/CR_1\text{-}CHI_1 \leftrightarrow CHI_A\text{-}CEI_S/CR_T$$

$$CEI_2/CR_2\text{-}CHI_2 \leftrightarrow CHI_B\text{-}CEI_C/CR_Y.$$

Das bedeutet z.B. daß die Koordinierung zwischen den Signalisierungsprozessen $CEI_1/CR_1$ und $CEI_S/CR_T$ über den B-Kanal erfolgt, der bei diesen Prozessen durch $CHI_1$ bzw. $CHI_A$ definiert ist.

**Patentansprüche**

1. Verfahren zum Austausch von Informationen wahlweise in verschlüsselter oder in unverschlüsselter Form zwischen ISDN-Endeinrichtungen (3, 5, 15, 16, 20, 21) mit ISDN-Standardschnittstellen ohne Sonderfunktionen unter Verwendung von Basis-Rufprozeduren, wobei die rufende ISDN-Endeinrichtung beim Verbindungsaufbau einen bestimmten Verbindungs-Zwischenzustand erreicht, ein rufendes Schlüsselgerät in diesem Zustand über das Netz hinweg die Verbindung zu einem gerufenen Schlüsselgerät herstellt und inband eine erforderliche Zusatzinformation übermittelt, wobei das Netz bereits die Verbindung zwischen den Schlüsselgeräten hergestellt hat, aber die rufende ISDN-Endeinrichtung, die gerufene ISDN-Endeinrichtung und das Netz noch nicht synchron bezüglich ihrer Verbindungszustände sind, und danach das gerufene Schlüsselgerät den Verbindungsaufbau zur gerufenen ISDN-Endeinrichtung startet, wobei auch die inbandübermittelte Zusatzinformation verwendet wird,

**dadurch gekennzeichnet,**

**daß** nach dieser Phase des Verbindungsaufbaus die beiden Schlüsselgeräte anstelle des Netzes den weiteren Verbindungsaufbau steuern, wobei das Netz emuliert und zur gegenseitigen Steuerung die bereits bestehende B-Kanalverbindung verwendet wird, in dem die D-Kanal-Prozeduren an den ISDN-Einrichtungsschnittstellen auf B-Kanal-Prozeduren an den Netzschnittstellen unter Einsatz einer Inband-Koordinierung abgebildet werden,
**daß** zur Inband-Koordinierung zwischen den Signalisierungsprozessen in den Schlüsselgeräten das rufende und gerufene Schlüsselgerät den an ihrer Netzschnittstelle jeweils zugeordneten B-Kanal der Übertragung der vorangehenden Signalisierungsinformation zwischen den ISDN-endeinrichtungsseitigen Signalisierungsprozessen, die durch jeweilige Parameterpaare CEI/CR auf beiden Seiten definiert sind, und der späteren Übermittlung der Anwenderinformation zuordnen.

## Claims

1. Method for exchanging information, selectively in encrypted form or in unencrypted form, between ISDN terminals (3, 5, 15, 16, 20, 21) having ISDN standard interfaces with no special functions using basic call procedures, where the calling ISDN terminal reaches a particular intermediate connection state when setting up a connection, in this state a calling key appliance sets up the connection to a called key appliance across the network and transmits necessary additional information in-band, where the network has already set up the connection between the key appliances but the calling ISDN terminal, the called ISDN terminal and the network are not yet synchronous in terms of their connection states, and then the called key appliance starts connection set-up to the called ISDN terminal, with the additional information transmitted in-band also being used,
**characterized**

**in that**, after this phase of connection set-up, the two key appliances control the rest of connection set-up instead of the network, with the network being emulated and the already existing B-channel connection being used for reciprocal control by virtue of the D-channel procedures on the ISDN device interfaces being mapped onto B-channel procedures on the network interfaces using in-band co-ordination,
**in that**, for the in-band co-ordination between the signalling processes in the key appliances, the calling and called key appliances allocate the respective B-channel associated with their network interface for transmission of the preceding signalling information between the ISDN-terminal-end signalling processes, which are defined by respective parameter pairs CEI/CR on both sides, and later transmission of the user information.

## Revendications

1. Méthode de transfert d'informations, au choix sous forme cryptée ou non cryptée, entre terminaux RNIS (3, 5, 15, 16, 20, 21) dotés d'interfaces standard RNIS sans fonctions particulières, à l'aide de procédures d'appel de base, dans laquelle le terminal RNIS appelant, au moment d'établir la connexion, atteint un état intermédiaire de connexion déterminé, un encrypteur appelant établit dans cet état, au-delà du réseau, la connexion avec un encrypteur appelé et transmet dans la bande une information complémentaire requise, le réseau ayant déjà établi la connexion entre les encrypteurs mais le terminal RNIS appelant, le terminal RNIS appelé et le réseau n'étant pas encore synchrones en ce qui concerne leurs états de connexion, et l'encrypteur appelé lance ensuite l'établissement de la connexion avec le terminal RNIS appelé en utilisant également l'information complémentaire transmise dans la bande,
**caractérisée en ce que**

après cette phase d'établissement de la connexion, les deux encrypteurs commandent la suite de l'établissement de la connexion à la place du réseau, le réseau étant émulé, et pour la commande mutuelle, la connexion déjà existante sur le canal B étant utilisée en appliquant les procédures de canal D aux interfaces installation RNIS aux procédures de canal B aux interfaces réseau à l'aide d'une coordination dans la bande,

pour la coordination dans la bande entre les processus de signalisation dans les encrypteurs, les encrypteurs appelant et appelé affectent le canal B, lequel est affecté à leur interface réseau respective, à la transmission de l'information de signalisation précédente entre les processus de signalisation aux terminaux RNIS, qui sont définis par des couples de paramètres respectifs CEI/CR sur les deux côtés, et au transfert ultérieur de l'information utilisateur.

FIG 1

```
                    ┌──────┐ 3            ┌──────┐ 3
                    │  TE  │─┘            │  TE  │─┘
                    └──────┘              └──────┘
   ┌──────────┐        │                     │
   │          │     ┌──────┐ 4            ┌──────┐ 4
   │  Netz    │     │  SG  │─┘            │  SG  │─┘
   │ (öffentl.,│    └──────┘              └──────┘
   │  priv.)  │        │                     │
   │          │────────┴─────────────────────┴──────
   │        1 │              2
   └──────────┘
```

FIG 2

```
                              ┌──────┐ 4
                              │      │─┘         ┌──────┐ 3        ┌──────┐ 3
   ┌──────────┐      6        ┌──────┐           │  TE  │─┘        │  TE  │─┘
   │          │               │      │           └──────┘          └──────┘
   │  Netz    │               │  SG  │              │                 │
   │ (öffentl.,│──────────────│      │──────────────┴─────────────────┴──────
   │  priv.)  │               └──────┘                    2
   │        1 │
   └──────────┘
```

EP 0 639 931 B1

FIG 3

FIG 4

7